# EUROPEAN PATENT APPLICATION

(11) **EP 0 869 090 A2**
(43) Date of publication of application: **07.10.1998**
(21) Application number: 98106147.6
(22) Date of filing: 03.04.1998
(51) Int. Cl.: B65G 45/16, B65G 45/12

(54) **Cleaning scraper for conveyors**

(30) Priority: 04.04.1997 IT VI970052
(71) Applicant: Dal Ferro, 36030 Montecchio Precalcino (VI) (IT)
(72) Inventor: Dal Ferro, 36030 Montecchio Precalcino (VI) (IT)
(74) Representative: Bonini, Ercole

(57) **Abstract**

The invention is a scraper (1) for conveyor belts (3) comprising one or more scraping elements (5) positioned in contact with the surface of the conveyor belt (3) to be scraped, each one belonging to a frame (6) connected to supporting means (8) arranged transversally with respect to said conveyor belt (3) through the interposition of elastic elements (7) suitable for making the contact area between said scraping elements (5) and said conveyor belt (3) yield. Each one of said frames (6) is provided with adjusting means (62) suitable for varying the position and pressure of said scraping elements (5) supported by it with respect to said conveyor belt (3).

## Description

The invention concerns a scraper-cleaner for conveyor belts.

It is known that the unloading area of conveyor belts is usually provided with a scraper that facilitates the removal of material.

In the known types of conveyor belt said scrapers comprise one or more scraping elements, each one supported by a frame applied to supporting means arranged transversally with respect to the conveyor belt and fixed to the structure on which the conveyor belt rests.

The scraper is positioned so that it adheres to an intermediate area of the conveyor belt and the contact between the belt and the scraping elements facilitates the removal of the material and its gravity fall.

The scrapers of the known type, however, present some drawbacks.

A first drawback is constituted by the fact that the scrapers-cleaners of the known type are not provided with adjusting means that make it possible to modify the pressure with which the scraping elements are pressed against the conveyor belt, in such a way as to maintain the scraping efficiency constant over time and to compensate for the wear to which said scraping elements are subjected, especially if they are made of rubber or other non-metallic materials.

A further inconvenience is constituted by the fact that the scrapers of the known type cannot be positioned so that they scrape the conveyor belt in correspondence with the driving drum or the idle drum, since the impossibility to adjust the pressure of each scraping element against the conveyor belt continuously and individually does not permit to arrange them according to the so-called "hump" profile, in which the driving drum and the idle drum are profiled in such a way as to maintain the directionality of the conveyor belt during its advance motion.

The invention aims at eliminating these inconveniences.

One of the goals of the invention is the implementation of a scraper for conveyor belts comprising several scraping elements, each one of which must be adjustable with respect to the conveyor belt with which it is in contact.

Another aim is the implementation of a scraper provided with adjusting means that make it possible to adjust the position of all the scraping elements with respect to the conveyor belt at the same time.

It is also aim of the invention to implement a scraper providing an elastic contact between the scraping elements with which the conveyor belt is provided.

The goals mentioned above are achieved through the implementation of a scraper for conveyor belts that, according to the main claim, comprises one or more scraping elements positioned in contact with the surface of the conveyor belt to be scraped, each one belonging to a frame connected to supporting means arranged transversally with respect to said conveyor belt through the interposition of elastic elements suitable for making the contact area between said scraping elements and said conveyor belt yield, and characterized in that each one of said frames is provided with adjusting means suitable for varying the position and pressure of the scraping elements supported by it with respect to said conveyor belt.

Said adjusting means preferably consist of one or more screws, each one of which is housed in a threaded through hole provided in said frame and when screwed rests against a first plate connecting said frame to said elastic elements.

According to a favourite application of the invention in question, each scraping element consists of a blade made of hard metal, for example widia, connected to a metal support by means of screws, welds, glueing or other systems, said metal support being connected to supporting means arranged transversally with respect to the conveyor belt through the interposition of said elastic elements, each one of which is made of a block of yielding material.

The supporting means of the scraper, which can be applied to any kind of conveyor belt, comprise a cylindrical shaft arranged transversally with respect to the conveyor belt and rotantingly coupled to supporting means fixed to the frame on which the conveyor belt itself rests.

To advantage, the possibility to adjust the position of each blade with respect to the conveyor belt makes it possible to adjust the scraping pressure of each blade and to improve its scraping efficiency.

Still to advantage, this possibility to adjust each single blade makes it possible to take up its slack and to keep its scraping efficiency constant over time, independently of wear.

Another advantage offered by the possibility to adjust the pressure and the position of each single blade is represented by the fact that the scraper can be installed in correspondence with the driving drum of the idle drum, in such a way as to perfectly copy the "hump" profile according to which each drum is shaped in order to maintain the directionality of the belt during its advance motion.

A further advantage is represented by the presence of the elastic elements, owing to which each scraping blade yields, thus avoiding any damage or breakage of the belt or of the blade itself in case of contact with particularly hard or large-sized materials or in case foreign bodies should get stuck between the belt and the drum on which it is wound.

The above mentioned goals and advantages will be better highlighted in the description of a favourite application among many of the invention in question, illustrated in the attached drawings, wherein:
- Fig. 1 is an axonometric view of the scraper object of the invention applied to a conveyor belt;
- Fig. 2 is a front view of the scraper of Fig. 1;
- Fig. 3 is a partial view, according to direction A of Fig. 2, of the scraper object of the invention shown in Fig. 2;
- Fig. 4 shows a transversal section of the scraper object of the invention shown in Fig. 2 according to the plane IV-IV;
- Fig. 5 is a side view of the scraper object of the invention represented in Fig. 1;
- Fig. 6 shows a detail of the scraper object of the invention represented in Fig. 5;
- Fig. 7 shows another detail of the scraper object of the invention represented in Fig. 5.

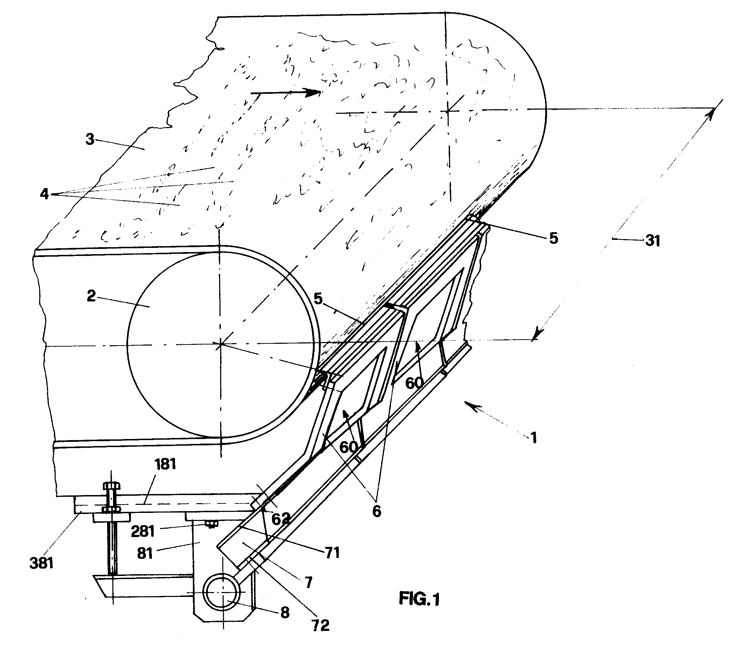

As shown in Fig. 1, the scraper object of the invention, indicated as a whole by 1, is applied in front of the drive drum 2 on which the conveyor belt 3 is wound and in correspondence of which the material 4 conveyed by the conveyor belt 3 itself is unloaded.

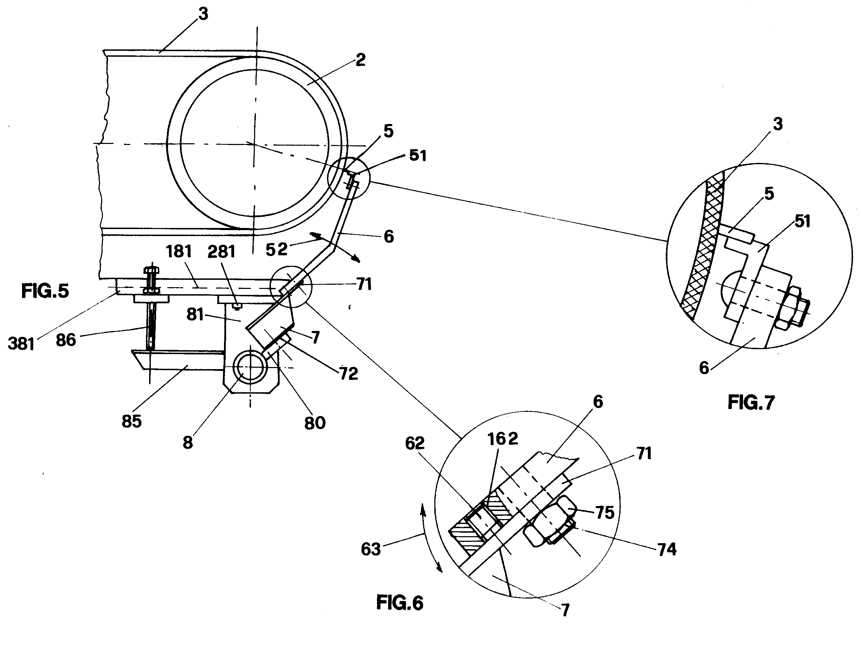

Said scraper comprises a plurality of scraping blades 5 that can be seen also in Fig. 5 and in the detail shown in Fig. 7, said blades being made of a hard metal, preferably widia, or even of metallic or non-metallic materials of various types, or sintered materials, too.

Each scraping blade 5 is applied onto a support 51 by means of screws, welds, glueing or other fastenings means, said support 51 being in turn fixed to a frame 6, preferably made of metal, inside which there is an opening 60 that favours the gravity fall onto the ground of the material removed from the conveyor belt, so that said material cannot accumulate between the conveyor belt and the scraper, as it happens in the applications already known.

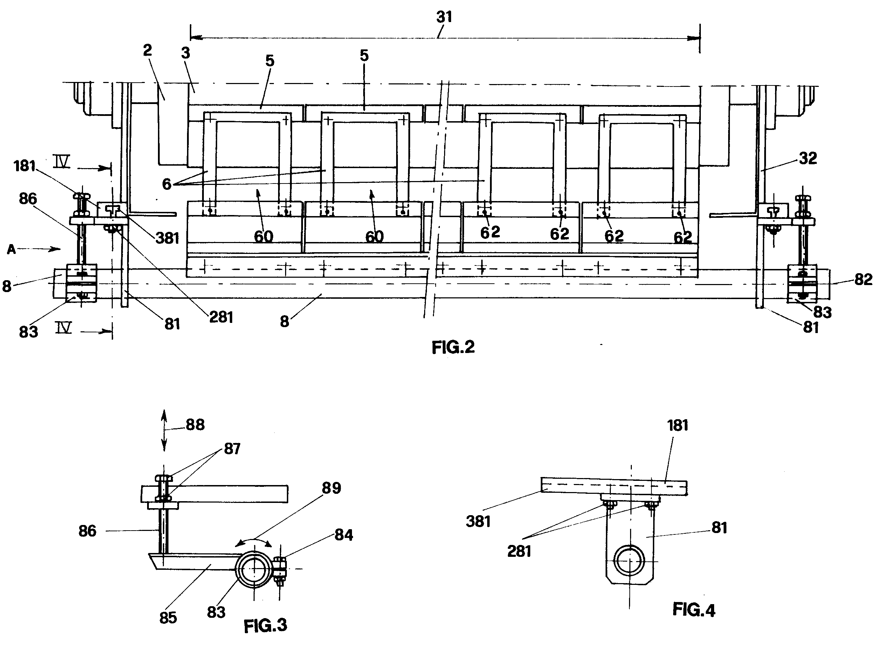

A plurality of said frames 6, as shown in Figure 2, is arranged and aligned in such a way as to cover the whole useful width 31 of the conveyor belt 3.

Each one of said frames 6, as shown in Figures 1 and 5, is connected to supporting means consisting of a shaft 8 arranged transversally with respect to the conveyor belt 3 through the interposition of an elastic element 7.

Said elastic element 7, which is preferably constituted by a rubber block, can also be constituted by springs or other yielding means, in case even fluid-operated means.

More particularly, said shaft 8 is rotatingly connected to supports 81 positioned at its ends and fixed to the bearing structure 32 of the conveyor belt 3, said shaft 8 being provided with a longitudinal plate 80 that supports said elastic elements 7, each one of which, as shown in detail in Fig. 5, is included between a first plate 71 by means of which it is fixed on each corresponding frame 6 and a second plate 72 by means of which it is fixed to said longitudinal plate 80.

Each frame 6 is therefore elastically connected to said shaft 8 and as a consequence of this each scraping blade 5 can oscillate elastically according to any of the directions indicated by the arrow 52, when the blade 5 meets an obstacle represented for example by particularly hard or large-sized pieces of material, or by a bulge on the belt caused by material that accidentally gets stuck between the driving drum and the belt.

This avoids abnormal stresses on the belt 3 or the blade 5, thus reducing the risk of damage or breakage.

As shown in Figure 6, each frame 6 is connected to the corresponding first plate 71 through a fastening screw 74 with nut 75 and presents adjusting means consisting of screws 62, in this case of two screws for each frame 6, as shown in Figure 2, and each one of said screws can be screwed into or unscrewed from a through hole 162 made in the frame 6 in which it is fitted. In this way, the pressure exerted by each screw 62 against said first plate 71 permits a limited rotation of the frame 6 according to the directions of the arrow 63 for the adjustment of the position and pressure of each scraping blade 5 with respect to the surface of the belt 3.

In this way, it is possible to vary the scraping pressure of each blade 5 according to either the type of belt and the type of material conveyed.

Furthermore, it is possible to position each blade 5 in correspondence with the driving drum 2 or the idle drum (the latter not represented in the drawings), since the possibility to adjust each blade 5 individually makes it possible to arrange it in such a way as to copy the so-called "hump〉〉 profile of the conveyor belt 3 in correspondence with said driving drum 2 or idle drum on which it is wound.

By means of this adjustment a homogeneous scraping action can be obtained on the entire generating line of the drum 2, independently of the wear or different elasticity of the scraping blade 5 and the elastic blocks 7.

In Figures 2, 3 and 4 it can also be observed that the shaft 8, rotatingly connected around its own axis 82 with respect to the fixed supports 81 to which it is coupled, is provided with a coupling 83 at each end, said coupling being fixed by means of a locking bolt 84 and provided with a rod 85 resting against a screw 86 belonging to the same support 81 or, alternatively, fixed to the bearing structure 32.

When the nut and lock nut 87 are adjusted, the screw 86 is moved vertically according to either of the directions indicated by the arrow 88, so that the shaft 8 can be rotated clockwise or anticlockwise as indicated by the arrow 89 and all the scraping blades 5 can be brought near the belt at the same time and each one of them can be pressed against the belt with the desired pressure.

Furthermore, each support 81 is fixed to the bearing structure 32 through the interposition of a plate 181 provided with a slot 381 that ensures the movement of the screws 281 that fasten the support 81, so that their position can be adjusted.

It is therefore clear that a possible procedure for the adjustment of the scraper consists in adjusting the nuts and lock nuts 87 and bringing all the scraping blades 5 near the conveyor belt 3. Successively, the pressure of each blade 5 against the belt 3 is adjusted by means of each adjusting screw 62 positioned on each frame 6.

While working, it is also possible to adjust either the screw 62 or the nut and lock nut 87, in such a way as to further adjust the pressure of the scraping blades 5.

The impact of large or hard pieces of the conveyed material 4 against each scraping blade 5 causes the oscillation of each frame 6 in the direction indicated by the arrow 52, due to the presence of the elastic block 7.

The above description clearly demonstrates that the scraper object of the invention actually achieves the set goals.

It must be precised that upon implementation the scraper can be provided with any number of frames 6, which can have any shape and on which scraping blades 5 of different types can be applied.

Furthermore, during operation the scraper can also be provided with different systems for the simultaneous adjustment of the position of all the scraping blades with respect to the conveyor belt and for the adjustment of each single blade.

Regarding the supports to which the transversal shaft bearing the blade support frames is rotatingly connected, these can have different shapes and sizes, in such a way as to achieve the contact of the blades with the conveyor belt in correspondence with different positions with respect to the driving drum or the idle drum axis.

Considering the possibility to adjust each one of its scraping blades individually, the scraper object of the invention can be successfully applied by placing the scraping blades themselves in contact with the conveyor belt in correspondence with the driving drum or the idle drum, but can in any case be installed in any other area of the belt, thus obtaining the contact of the scraping blades on any point of the conveyor belt, excepting the area where the belt is wound on the drums.

Furthermore, elastic elements in different shapes and materials can also be used.

All the mentioned variants and any other variant that has not been mentioned are to be considered as protected by the present invention, provided that they are based on the same innovative concept described herein.

## Claims

1. Scraper-cleaner (1) for conveyor belts (3), comprising one or more scraping elements (5) positioned in contact with the surface of the conveyor belt (3) to be scraped, each one belonging to a frame (6) connected to supporting means (8) arranged transversally with respect to said conveyor belt (3) through the interposition of elastic elements (7) suitable for making the contact area between said scraping elements (5) and said conveyor belt (3) yield, **characterized in that** each one of said frames (6) is provided with adjusting means (62) suitable for varying the position and pressure of said scraping elements (5) supported by it with respect to said conveyor belt (3).

2. Scraper-cleaner (1) for conveyor belts (3) according to claim 1), **characterized in that** said adjusting means of said scraping elements (5) with respect to said conveyor belt (3) are constituted by one or more screws (62), each one of which is housed in a threaded through hole (162) provided in each frame (5) and when screwed rests against a first plate (71) connecting said frame (6) to said elastic elements (7).

3. Scraper- cleaner (1) for conveyor belts (3) according to claim 1), **characterized in that** each one of said elastic elements is constituted by a block made of yielding material (7) provided with a first plate (71) connected to the corresponding frame (6) on one side and with a second plate (72) connected to a longitudinal plate (80) fixed longitudinally to said supporting means (8) on the other side.

4. Scraper-cleaner (1) for conveyor belts (3) according to claim 1), **characterized in that** inside each one of said frames (6) a hole (60) is provided, which is suitable for ensuring the gravity flow of the material that said scraping elements (5) remove from said conveyor belt (3).

5. Scraper-cleaner (1) for conveyor belts (3) according to claim 1), **characterized in that** said supporting means to which said frames (6) are connected consist of a shaft (8) arranged transversally with respect to said conveyor belt (3), the ends of said shaft being housed inside supports (81) fixed to the bearing structure (32) supporting the conveyor belt (3) itself.

6. Scraper-cleaner (1) for conveyor belts (3) according to claim 5), **characterized in that** each end of said shaft (8) is provided with a coupling (83) fixed to said shaft (8) and provided with a rod (85) resting against a screw (86) belonging to the same support (81), said screw (86) being provided with a nut and lock nut (87) suitable for varying its position with respect to said rod (85) against which it rests, in order to obtain the rotation of said shaft (8) on its own longitudinal axis (82) to adjust the inclination of said frames (6) with respect to said conveyor belt (3).

7. Scraper-cleaner (1) for conveyor belts (3) according to claim 1), **characterized in that** each one of said scraping elements (5) is fixed to the corresponding frame (6) through the interposition of a support element (51) consisting of an angular profile.

8. Scraper-cleaner (1) for conveyor belts (3) according to claim 1) or 6), **characterized in that** each one of said scraping elements consists of a scraping blade (5) made of a metallic material.

9. Scraper-cleaner (1) for conveyor belts (3) according to claim 1) or 6), **characterized in that** each one of said scraping elements consists of a scraping blade (5) made of a non-metallic material.

10. Scraper-cleaner (1) for conveyor belts (3) according to claim 1) or 6), **characterized in that** each one of said scraping elements consists of a scraping blade (5) made of a sintered material.

11. Scraper-cleaner (1) for conveyor belts (3) according to claim 1) or 6), **characterized in that** each one of said scraping elements consists of a scraping blade (5) made of hard metal.

12. Scraper-cleaner (1) for conveyor belts (3) according to claim 11), **characterized in that** the hard metal of which each one of said scraping blades (5) is made is widia.

13. Scraper-cleaner (1) for conveyor belts (3) according to claim 3), **characterized in that** said block of yielding material (7) is a rubber block.

14. Scraper-cleaner (1) for conveyor belts (3) according to claim 1) or 2), **characterized in that** said elastic elements (7) are springs.

15. Scraper-cleaner (1) for conveyor belts (3) according to claim 1) or 2), **characterized in that** said elastic elements (7) are fluid-operated means.

16. Scraper-cleaner (1) for conveyor belts (3) according to claim 5), **characterized in that** each one of said supports (81) is fixed to said bearing structure (32) through the interposition of a plate (181) provided with a slot (381) in which the screws (281) for the locking of said support (81) are slidingly coupled.
